(19) Europäisches Patentamt / European Patent Office / Office européen des brevets

(11) **EP 1 989 820 B1**

(12) **FASCICULE DE BREVET EUROPEEN**

(45) Date de publication et mention de la délivrance du brevet:
**28.09.2016  Bulletin 2016/39**

(51) Int Cl.:
***H04L 9/06*** (2006.01)

(21) Numéro de dépôt: **07731656.0**

(22) Date de dépôt: **22.02.2007**

(86) Numéro de dépôt international:
**PCT/FR2007/050836**

(87) Numéro de publication internationale:
**WO 2007/096566 (30.08.2007 Gazette 2007/35)**

(54) **DISPOSITIF ET PROCÉDÉ DE HACHAGE CRYPTOGRAPHIQUE**

VORRICHTUNG UND VERFAHREN FÜR KRYPTOGRAFISCHES HASHING

CRYPTOGRAPHIC HASHING DEVICE AND METHOD

(84) Etats contractants désignés:
**AT BE BG CH CY CZ DE DK EE ES FI FR GB GR HU IE IS IT LI LT LU LV MC NL PL PT RO SE SI SK TR**

(30) Priorité:  **23.02.2006  FR 0650619**

(43) Date de publication de la demande:
**12.11.2008  Bulletin 2008/46**

(73) Titulaire: **Orange**
**75015 Paris (FR)**

(72) Inventeurs:
• **BILLET, Olivier**
**F-06140 Tourrettes Sur Loup (FR)**
• **GILBERT, Henri**
**F-91440 Bures Sur Yvette (FR)**
• **ROBSHAW, Matt**
**F-75010 Paris (FR)**

(74) Mandataire: **Delumeau, François Guy et al**
**Cabinet Beau de Loménie**
**158, rue de l'Université**
**75340 Paris Cedex 07 (FR)**

(56) Documents cités:
**US-B1- 6 269 098**

• JAKUBOWSKI M H ET AL: "The chain and sum primitive and its applications to MACs and stream ciphers" ADVANCES IN CRYPTOLOGY. EUROCRYPT, 4 juin 1998 (1998-06-04), pages 281-293, XP002310899
• SUNAR B ET AL: "Comparison of Bit and Word Level Algorithms for Evaluating Unstructured Functions over Finite Rings" CRYPTOGRAPHIC HARDWARE AND EMBEDDED SYSTEMS - CHES 2005. 7TH INTERNATIONAL WORKSHOP. PROCEEDINGS (LECTURE NOTES IN COMPUTER SCIENCE VOL. 3659), 2005, pages 237-249, XP019017434
• SHOUP V ED - KOBLITZ N (ED) INTERNATIONAL ASSOCIATION FOR CRYPTOLOGIC RESEARCH: "ON FAST AND PROVABLY SECURE MESSAGE AUTHENTICATION BASED ON UNIVERSAL HASHING" ADVANCES IN CRYPTOLOGY - CRYPTO '96. 16TH. ANNUAL INTERNATIONAL CRYPTOLOGY CONFERENCE. SANTA BARBARA, AUG. 18 - 22, 1996. PROCEEDINGS, PROCEEDINGS OF THE ANNUAL INTERNATIONAL CRYPTOLOGY CONFERENCE (CRYPTO), BERLIN, SPRINGER, DE, vol. CONF. 16, 18 août 1996 (1996-08-18), pages 313-328, XP000626593 ISBN: 3-540-61512-1

## Description

<u>Domaine technique de l'invention</u>

L'invention se rapporte au domaine de la cryptographie. Plus précisément, l'invention concerne l'utilisation d'une fonction de condensation (dite aussi de "compression", ou encore de "hachage") cryptographique.

<u>Arrière-plan de l'invention</u>

Les fonctions de hachage sont très utilisées en cryptographie. En effet, elles peuvent être utilisées pour réduire la longueur d'une donnée numérique, par exemple pour produire une signature électronique ou un certificat électronique afin de garantir l'intégrité et l'authenticité d'un message. En outre, les fonctions de hachage peuvent former des parties essentielles d'une large gamme de protocoles, comme les protocoles d'authentification d'une entité cryptographique, ou le protocole SSL/TLS.

D'une manière générale, une fonction de hachage H est une fonction de compression qui convertit un grand ensemble de caractères (appelé message ou entrée) de longueur quelconque en un plus petit ensemble de caractères de longueur fixe (appelé sortie, condensé ou haché). En outre, la fonction de hachage est « à sens unique » afin qu'il soit impossible de retrouver l'ensemble original à partir du condensé.

Un tel exemple de fonction de hachage est décrit par R.C. Merkle dans l'article « One-Way Hash Functions and DES » (CRYPTO, Springer-Verlag 1989), où le condensé est calculé selon un principe de chaînage.

Plus précisément, une fonction est considérée comme une fonction de hachage cryptographique si elle remplit les trois conditions suivantes : une résistance aux attaques "sur la première préimage" (ou antécédent), une résistance aux attaques "sur la seconde préimage", et une résistance aux "collisions".

La résistance à une attaque sur la première préimage est le fait qu'il est très difficile (c'est-à-dire techniquement quasi-impossible) de trouver le contenu d'un message ou entrée x à partir d'un condensé ou sortie donné y. Autrement dit, il est techniquement quasi-impossible (que ce soit au niveau algorithmique ou matériel) de trouver une entrée x telle que $H(x)=y$.

La résistance à une attaque sur la seconde préimage est le fait qu'il est très difficile de produire à partir d'un message donné x et de son condensé y, un autre message x' qui donne le même condensé y. Autrement dit, étant donné un couple d'entrée-sortie (x, y) avec $H(x)=y$, il est très difficile de trouver une entrée x' avec $x'{\neq}x$ tel que $H(x')=y$.

La résistance aux collisions est le fait qu'il est très difficile de trouver deux messages aléatoires qui donnent le même condensé. Autrement dit, il est très difficile de trouver deux entrées quelconques x et x' tel que $H(x)=H(x')$.

A titre d'exemple, pour un condensé présentant une longueur de n bits, il existe $2^n$ condensés de ce type. Par ailleurs, il est connu par le théorème dit "des anniversaires" qu'il suffit de $2^{n/2}$ essais pour trouver une collision au hasard.

Ainsi, une fonction de hachage cryptographique est considérée comme étant de bonne qualité, si le nombre minimal d'essais nécessaires pour résoudre les trois problèmes ci-dessus est de l'ordre de $2^n$, $2^n$, et $2^{n/2}$ respectivement.

Actuellement, les fonctions de hachage couramment utilisées sont construites au coup par coup ou fondées sur l'utilisation d'un chiffrement par blocs de type DES (initiales des mots anglais *"Data Encryption Standard"*). Cependant, ces dernières présentent une performance et des longueurs de condensés qui ne sont pas très adaptées pour les utilisations actuelles en cryptographie.

Les fonctions de hachage les plus utilisées à ce jour sont de type MD5 (Message Digest Algorithme) et SHA-1 (initiales des mots anglais *"Secure Hash Standard"*, voir http://www.ietf.org/rfc/rfc3174.txt).

Cependant, X. Wang et H. Yu ont montré, dans leurs articles « How to Break MD5 and Other Hash Functions» en mai 2005 et « Finding Collisions in the Full SHA-1 » en août 2005, que ces fonctions présentent des faiblesses permettant un calcul de collisions plus rapide que celui fondé sur le pur hasard. De mêmes, d'autres types de fonctions de hachage faisant également partie de la famille MD5 sont aussi vulnérables.

On a essayé de construire d'autres fonctions de hachage reposant à travers certaines preuves sur la difficulté de résoudre certaines classes de problèmes dans le cadre de l'arithmétique des grands nombres. L'inconvénient majeur de ces fonctions est le manque d'efficacité due à l'arithmétique des grands nombres. De plus, elles ne garantissent que la résistance aux collisions et ne remplissent donc pas les conditions de résistances relatives aux attaques sur la première préimage et la seconde préimage.

Un hachage cryptographique au moyen de polynômes multivariés est décrit dans le document JAKUBOWSKI M H ET AL: "The chain and sum primitive and its applications to MACs and stream ciphers", ADVANCES IN CRYPTOLOGY. EUROCRYPT, 4 juin 1998 (1998-06-04), pages 281-293.

<u>Objet et résumé de l'invention</u>

L'étendue de la présente invention est limitée par les revendications en annexe.

La présente invention concerne un procédé de hachage cryptographique d'un message M, comportant les étapes suivantes :

- former une séquence (M1,...Mi;...,Mc) de m-uplets de données, où m est un entier strictement positif, à partir dudit message M,
- calculer de manière itérative des p-uplets successifs de sortie $V_1,...V_i,...,V_c$, où p est un entier strictement positif, correspondant à ladite séquence de m-uplets de données en fonction d'au moins un ensemble de polynômes multivariés définis sur un corps fini, et
- déterminer une valeur de hachage dudit message M en fonction du dernier p-uplet de sortie $V_c$.

En effet, l'évaluation de systèmes de polynômes sur un corps fini est extrêmement rapide, surtout pour des polynômes de bas degré (par exemple de degré 2, 3 ou 4), alors qu'il est très difficile d'inverser une évaluation polynomiale en un temps raisonnable. En effet, trouver un antécédent d'une valeur prise par un ensemble de polynômes est connu pour être un problème mathématique très difficile.

Ainsi, on peut facilement accéder à de nouvelles propriétés de sécurité, difficilement réalisables par l'art antérieur qui utilise des fonctions de hachage qui sont toutes construites selon les mêmes principes et qui subissent beaucoup d'attaques.

Le calcul itératif des p-uplets successifs de sortie $V_1,...v_i,...,V_c$ comporte les étapes suivantes :

- définir un p-uplet d'entrée d'initialisation $E_0=(e_{o1},...,e_{0p})$ dans le corps fini,
- appliquer ledit p-uplet d'entrée d'initialisation $E_0$ et un premier m-uplet de données M1 audit au moins un ensemble de polynômes multivariés pour calculer un premier p-uplet de sortie $V_1$ correspondant audit premier m-uplet de données M1,

et en ce que chaque nouvelle itération numéro i courante comporte les étapes suivantes :

- définir dans le corps fini un p-uplet d'entrée courant $E_i=(e_{i1},...,e_{ip})$ qui est fonction au moins de l'un des p-uplets de sortie $V_1,..., V_{i-1}$ calculés aux itérations précédentes,
- appliquer ledit p-uplet d'entrée courant $E_i$ et un m-uplet de données courant Mi audit au moins un ensemble de polynômes multivariés pour calculer un p-uplet de sortie courant $V_i$ correspondant audit m-uplet de données courant Mi.

Ainsi, la mise en oeuvre du procédé est simple et fournit un niveau de sécurité élevé.

Avantageusement, le p-uplet d'entrée courant $E_i=(e_{i1},...,e_{ip})$ correspond à un p-uplet d'enchaînement défini comme étant égal au précédent p-uplet de sortie $V_{i-1}$ calculé à l'itération précédente.

Ainsi, pour chaque m-uplet de donnée Mi, le p-uplet d'entrée correspondant est déjà calculé à l'itération précédente en fonction du précédent p-uplet d'enchaînement $V_{i-1}$ et du précédent m-uplet de données, ce qui facilite encore davantage la mise en oeuvre du procédé tout en fournissant une grande sécurité.

Avantageusement, ledit au moins un ensemble de polynômes multivariés peut être modifié à chaque itération i en fonction dudit p-uplet d'entrée courant $E_i=(e_{i1},...,e_{ip})$.

Ainsi, l'inversion d'une évaluation polynomiale devient encore plus complexe, ce qui augmente la sécurité sans trop diminuer l'efficacité et la rapidité du calcul de la valeur de hachage.

Selon un mode de réalisation particulier de l'invention, le calcul dudit p-uplet de sortie $V_i$ correspondant audit m-uplet de données Mi comporte une application simultanée dudit m-uplet de données et du p-uplet d'entrée correspondant $E_i$ à un seul ensemble de polynômes multivariés, ledit ensemble de polynômes multivariés étant de forme compressive.

On dit qu'un ensemble de polynômes multivariés est de forme compressive quand cet ensemble comporte un nombre de polynômes plus petit que le nombre de variables associées à chaque polynôme.

Ainsi, la valeur de hachage est calculée avec un niveau de sécurité élevé et en un temps optimal.

Selon un autre mode de réalisation de l'invention, le calcul dudit p-uplet de sortie $V_i$ correspondant audit m-uplet de données Mi comporte les étapes suivantes :

- calculer un t-uplet de données intermédiaire en appliquant ledit m-uplet de données Mi à un premier ensemble de polynômes multivariés,
- appliquer simultanément ledit t-uplet de données intermédiaire et le p-uplet d'entrée $E_i$ correspondant audit m-uplet de données Mi à un second ensemble de polynômes multivariés pour déterminer ledit p-uplet de sortie $V_i$.

Ainsi, le niveau de sécurité est augmenté. En effet, il est encore plus difficile de trouver le message à partir d'une valeur de hachage déterminée par deux ensembles enchaînés de polynômes multivariés même si ces polynômes sont de petit degré, par exemple de degré 2.

Selon un autre mode de réalisation de l'invention, le calcul dudit p-uplet de sortie correspondant audit m-uplet de données Mi comporte les étapes suivantes :

- calculer un t-uplet de données intermédiaire en appliquant simultanément ledit m-uplet de données et ledit p-uplet d'entrée $E_i$ correspondant à un premier ensemble de polynômes multivariés,
- appliquer ledit t-uplet de données intermédiaire à un second ensemble de polynômes multivariés pour déterminer ledit p-uplet de sortie $V_i$.

Cet autre mode de réalisation présente une grande sécurité car il est très difficile de trouver le message à partir d'une valeur de hachage déterminée par deux ensembles enchaînés de polynômes multivariés même si ces polynômes sont de petit degré.

Avantageusement, ledit premier ensemble de polynômes multivariés est de forme expansive, et ledit second ensemble de polynômes multivariés est de forme compressive.

On dit qu'un ensemble de polynômes multivariés est de forme expansive quand cet ensemble comporte un nombre de polynômes plus grand que le nombre de variables associées à chaque polynôme.

La forme expansive du premier ensemble de polynômes multivariés permet de garantir la non-collision au cours de la première étape et d'augmenter la résistance aux collisions au cours de l'étape suivante de compression.

L'invention vise aussi un dispositif de hachage cryptographique d'un message M, comportant :

- des moyens de formation pour former une séquence (M1,...Mi,...,Mc). de m-uplets de données M1=$(a_{1,1},....,a_{1,m})$,..., Mi=$(a_{i,1},....,a_{i,m})$,..., Mc=$(a_{c,1},....,a_{c,m})$, où m est un entier strictement positif, à partir dudit message M,
- des moyens de calcul pour calculer de manière itérative des p-uplets successifs de sortie $V_1,...V_i,...,V_c$, où p est un entier strictement positif, correspondant à ladite séquence (M1,...Mi,...,Mc) de m-uplets de données en fonction d'au moins un ensemble de polynômes multivariés définis sur un corps fini F, et
- des moyens de détermination pour déterminer une valeur de hachage dudit message M en fonction du dernier p-uplet de sortie $V_c$.

Avantageusement, lesdits moyens de calcul comportent:

- des moyens pour définir un p-uplet d'entrée d'initialisation $E_0=(e_{o1},...,e_{0p})$ dans le corps fini F,
- des moyens pour appliquer ledit p-uplet d'entrée d'initialisation $E_0$ et un premier m-uplet de données M1 audit au moins un ensemble de polynômes multivariés pour calculer un premier p-uplet de sortie $V_1$ correspondant audit premier m-uplet de données M1,
- des moyens pour définir dans le corps fini F à chaque nouvelle itération numéro i courante, un p-uplet d'entrée courant $E_i=(e_{i1},...,e_{ip})$ qui est fonction au moins de l'un des p-uplets de sortie $V_1,..., V_{i-1}$ calculés aux itérations précédentes, et
- des moyens pour appliquer ledit p-uplet d'entrée courant $E_i$ et un m-uplet de données courant Mi audit au moins un ensemble de polynômes multivariés pour calculer un p-uplet de sortie courant $V_i$ correspondant audit m-uplet de données courant Mi.

L'invention vise également un programme d'ordinateur téléchargeable depuis un réseau de communication et/ou stocké sur un support lisible par ordinateur et/ou exécutable par un microprocesseur, comprenant des instructions pour l'exécution des étapes du procédé de hachage cryptographique selon au moins l'une des caractéristiques ci-dessus, lorsqu'il est exécuté sur un ordinateur.

Brève description des dessins

D'autres particularités et avantages de l'invention ressortiront à la lecture de la description faite, ci-après, à titre indicatif mais non limitatif, en référence aux dessins annexés, sur lesquels :

- la figure 1 est une vue schématique d'un dispositif de hachage cryptographique d'un message, selon l'invention ;
- les figures 2 à 4 sont des exemples de modes de réalisation particuliers de la figure 1 ; et
- la figure 5 illustre très schématiquement un système informatique mettant en oeuvre le dispositif de hachage cryptographique selon les figures 1 à 4.

Description détaillée de modes de réalisation

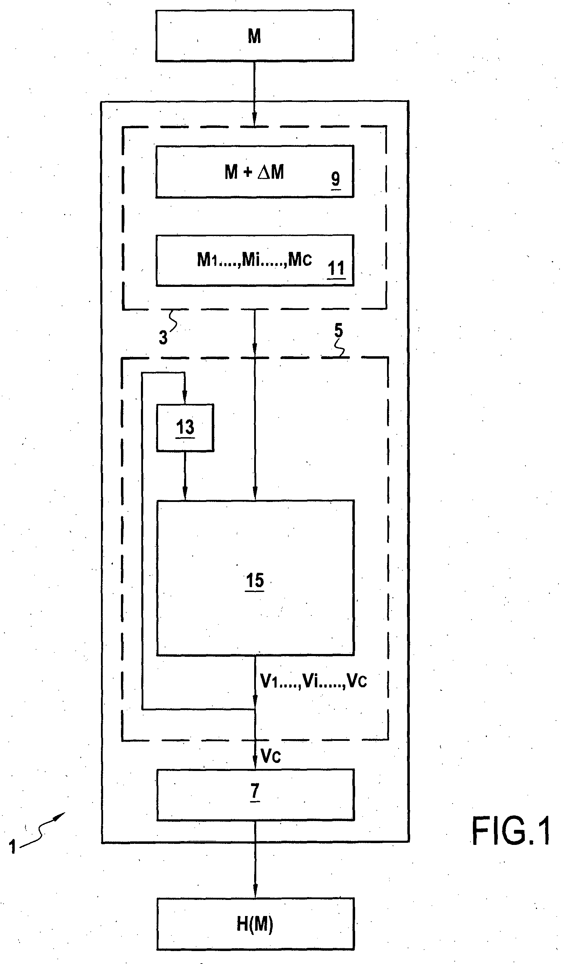

Conformément à l'invention, la figure 1 illustre un exemple d'un dispositif 1 de hachage cryptographique d'un message, par exemple en vue de chiffrer ou signer ce message. Ce dispositif 1 comprend des moyens de formation 3, des moyens de calcul 5 et des moyens de détermination 7.

Les moyens de formation 3 sont destinés à former une séquence M1,...Mi,...,Mc de blocs ou m-uplets de données à partir d'un message M. Ainsi, le message M, qui est d'une longueur quelconque, peut être représenté par une séquence de m-uplets $M1=(a_{1,1},...,a_{1,m})$,..., $Mi=(a_{i,1},...,a_{i,m})$,..., $Mc=(a_{c,1},...,a_{c,m})$, où m est un entier strictement positif. Les m-uplets sont définis dans un corps fini F qui peut par exemple être le corps binaire GF(2).

Ceci peut être typiquement réalisé en ajoutant ou en concaténant de manière sécurisée, des éléments supplémentaire $\Delta M$ au message d'origine M pour former un message complété $M+\Delta M$ dont la longueur est un multiple de celle d'un bloc Mi. Selon cet exemple, le message complété $M+\Delta M$ présente une longueur égale à c multiplié par m ($|M+\Delta M| = |cm|$). Bien entendu, il est suffisant mais non nécessaire que la longueur de $\Delta M$ soit inférieure à m. Avantageusement, les éléments supplémentaire $\Delta M$ peuvent comporter des informations relatives au message M d'origine comme la longueur initiale de ce message M.

Ainsi, les moyens de formation 3 peuvent comporter des moyens de bourrage 9 ("*padding means*" en anglais) et des moyens de subdivision 11. Les moyens de bourrage 9 sont destinés à bourrer le message M par les éléments supplémentaire $\Delta M$ afin de compléter sa longueur pour pouvoir le subdiviser. En effet, les moyens de subdivision 11 sont destinés à subdiviser le message complété $M+\Delta M$ pour former la séquence de m-uplets M1,...,Mi,...,Mc.

Les moyens de calcul 5 permettent de calculer de manière itérative des p-uplets successifs de sortie $V_1,...V_i,...,V_c$, où p est un entier strictement positif, correspondant à la séquence (M1,...Mi,...,Mc) de m-uplets de données en fonction d'au moins un ensemble de polynômes multivariés $\Pi$ de degré quelconque définis sur un corps fini F.

Finalement, les moyens de détermination 7 permettent de déterminer une valeur de hachage H(M) du message M en fonction du dernier p-uplet de sortie $V_c$. Ainsi, la valeur de hachage $H(M)=\varphi(V_c)$ où $\varphi$ est une fonction quelconque qui peut tout simplement être la fonction identité de sorte que $H(M)=V_c$.

Les moyens de calcul peuvent comporter des moyens de définition 13 et des moyens d'application 15.

En effet, au cours d'une phase d'initialisation, les moyens de définition 13 permettent de définir un p-uplet d'entrée d'initialisation noté $E_0=(e_{o1},...,e_{0p})$ dans le corps fini F. Ensuite, les moyens d'application 15 appliquent le p-uplet d'entrée d'initialisation $E_0$ et le premier m-uplet de données M1 audit au moins un ensemble de polynômes multivariés n pour calculer un premier p-uplet de sortie $V_1$ correspondant au premier m-uplet de données M1.

Ensuite, à chaque nouvelle itération numéro i courante, les moyens de définition 13 définissent dans le corps fini F, un p-uplet d'entrée courant $E_i=(e_{i1},...,e_{ip})$.

Le p-uplet d'entrée initial ou courant $E_i=(e_{i1},...,e_{ip})$ peut être un sous-ensemble d'un m-uplet de données Mi. Par ailleurs, le p-uplet d'entrée courant $E_i=(e_{i1},...,e_{ip})$ peut être défini en fonction d'au moins un des p-uplets de sortie $V_i,..., V_{i-1}$ calculés aux itérations précédentes par les moyens d'application 15, c'est-à-dire $E_i=f(V_1,..., V_{i-1})$.

Avantageusement, le p-uplet d'entrée courant $E_i=(e_{i1},...,e_{ip})$ n'est fonction que du p-uplet de sortie $V_{i-1}$ calculé à l'itération précédente, c'est-à-dire $E_i=f(V_{i-1})$ ou de manière explicite $(e_{i1},...,e_{ip})= f(v_{i-1,1},...,v_{i-1,p})$.

Les moyens d'application 15 appliquent le p-uplet d'entrée courant $E_i$ et un m-uplet de données courant Mi audit au moins un ensemble de polynômes multivariés $\Pi$ pour calculer un p-uplet de sortie courant $V_i$ correspondant au m-uplet de données courant Mi.

Ainsi, le processus général de hachage cryptographique peut être modélisé de la manière suivante :

$$V_0= E_0, \quad V_i=\Pi(f(V_{i-1}), M_i) \text{ pour } 1\leq i\leq c \text{ et } H(M)=\varphi(V_c).$$

Avantageusement, pour faciliter le calcul, le p-uplet d'entrée courant $E_i=(e_{i1},...,e_{ip})$ peut correspondre à un p-uplet d'enchaînement défini comme étant égal au précédent p-uplet de sortie $V_{i-1}$ calculé à l'itération précédente. Ainsi, les moyens de calcul 15 peuvent calculer des valeurs successives $V_i$ du p-uplet d'enchaînement en appliquant de manière itérative le m-uplet Mi avec la valeur précédente $V_{i-1}$ du p-uplet d'enchaînement audit au moins un ensemble de polynômes multivariés $\Pi$ pour déterminer la valeur de hachage H(M) du message M de la manière suivante :

$$V_0= E_0, \quad V_i=\Pi(V_{i-1}, M_i) \text{ pour } 1\leq i\leq c \text{ et } H(M)=\varphi(V_c).$$

Eventuellement, pour accroître la sécurité, les moyens de définition 13 peuvent modifier ledit au moins un ensemble de polynômes multivariés $\Pi$ à chaque itération i en fonction du p-uplet d'entrée courant $E_i=(e_{i1},...,e_{ip})$. Ainsi, l'ensemble de polynômes multivariés $\Pi$ peut être engendré de manière dynamique selon un mécanisme spécifié par

$f(V_{i-1})$.

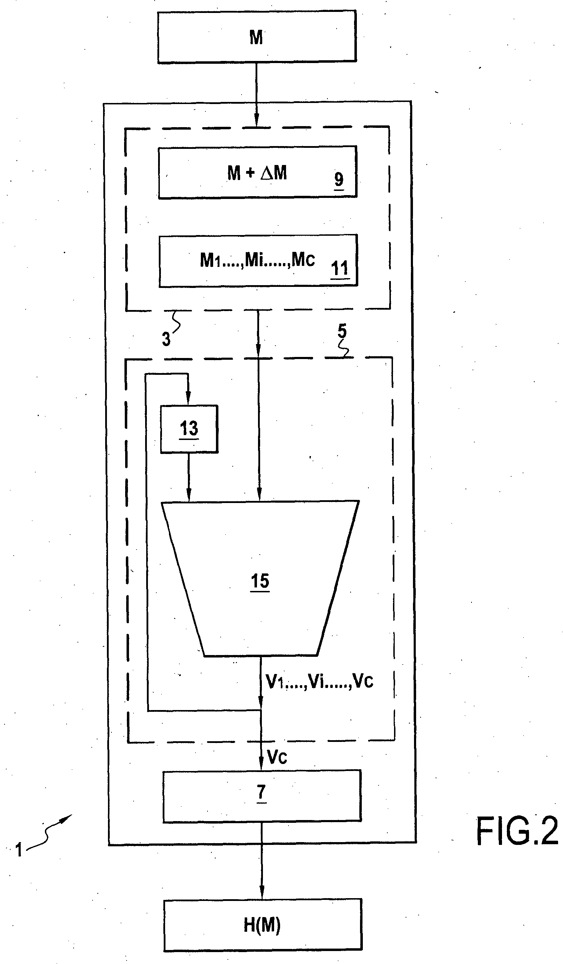

Les figures 2 à 4 illustrent plusieurs modes de réalisation d'un dispositif de hachage cryptographique qui se distingue de celui de la figure 1 uniquement par les moyens d'application en relation avec ledit au moins un ensemble de polynômes multivariés $\Pi$.

En effet, la figure 2 illustre un mode de réalisation particulier du dispositif 1 de hachage cryptographique qui se distingue de celui de la figure 1 par le fait que ledit au moins un ensemble de polynômes multivariés $\Pi$ est constitué par un seul ensemble de polynômes multivariés. Cet ensemble de polynômes multivariés est de forme compressive. Par « polynômes multivariés de forme compressive », on entend un ensemble de polynômes multivariés comportant un nombre de polynômes plus petit que le nombre de variables associées à chaque polynôme. Dans ce cas, l'ensemble de polynômes multivariés noté $\Pi_{(p,k)}$ comporte un ensemble de p polynômes $P_1(x_1,...,x_k),...,P_p(x_1,...,x_k)$, par exemple de degré 3 ou 4 et chacun étant à k variables avec p<k.

Ainsi, les moyens d'application 15 permettent le calcul d'un p-uplet de sortie $V_i$ correspondant à un m-uplet de données Mi en appliquant simultanément le m-uplet de données et le p-uplet d'entrée correspondant $E_i$ à l'ensemble de polynômes multivariés $\Pi_{(p,k)}$.

Autrement dit, les moyens d'application 15 forment un k-uplet $(a_{i1},...,a_{im},e_{i1},...,e_{ip})$ avec k=m+p, en concaténant audit m-uplet de données Mi, un p-uplet d'entrée de sorte que le p-uplet de sortie $V_i$ est calculé par une évaluation polynomiale de l'ensemble de polynômes multivariés $\Pi_{(p,k)}$ de la manière suivante :

$$\Pi_{(p,k)}(a_{i1},...,a_{im},e_{i1},...,e_{ip})= (v_{i1},...,v_{ip}).$$

A titre d'exemple, un polynôme multivariés en les quatre variables $x_1$, $x_2$, $x_3$, $x_4$ sur le corps fini GF(2) avec une addition ou exclusive et une multiplication booléenne entre deux bits, peut avoir la forme suivante :

$$P(x_1, x_2, x_3, x_4)= x_1\, x_2 + x_1\, x_3\, x_4 + x_4 + 1.$$

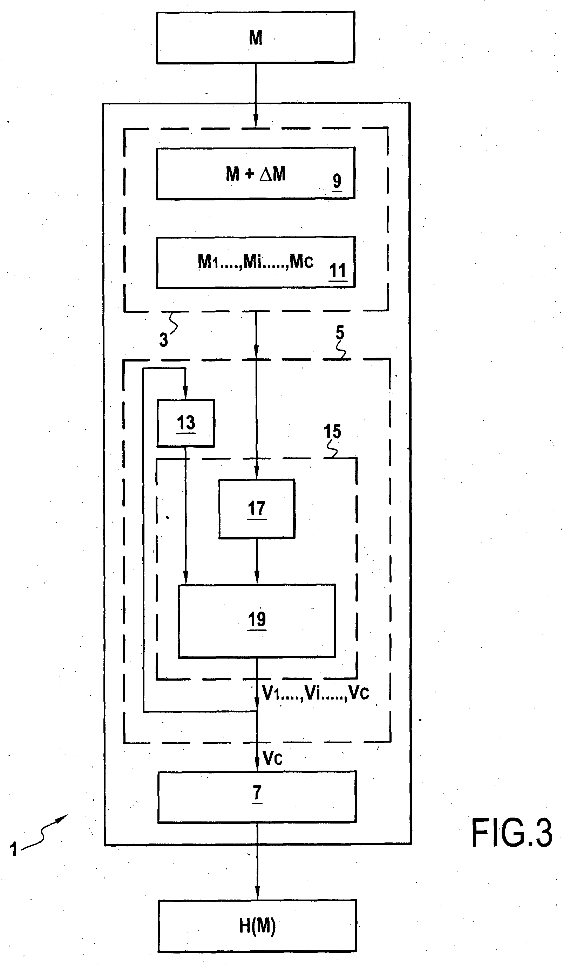

La figure 3 illustre un autre mode de réalisation du dispositif 1 de hachage cryptographique. Le dispositif de la figure 3 se distingue de celui de la figure 1 par le fait que ledit au moins un ensemble de polynômes multivariés $\Pi$ est constitué par deux ensembles de polynômes multivariés :

$$\Pi^1_{(t,m)}=P^1_1(x_1,...,x_m),...,P^1_t(x_1,...,x_m) \text{ et } \Pi^2_{(p,k)}= P^2_1(x_1,...,x_k),...,P^2_p(x_1,...,x_k).$$

Selon cet exemple, le premier ensemble de polynômes multivariés $\Pi^1_{(t,m)}$ comporte t polynômes à m variables et le second ensemble de polynômes multivariés $\Pi^2_{(p,k)}$ comporte p polynômes à k variables avec ici k=t+p.

Ainsi, pour calculer le p-uplet de sortie $V_i$ correspondant au m-uplet de données Mi, les moyens d'application 15 comporte un premier moyen d'application 17 et un second moyen d'application 19.

Le premier moyen d'application 17 permet de calculer un t-uplet de données intermédiaire $(b_{i1},...,b_{it})$ en appliquant le m-uplet de données Mi au premier ensemble de polynômes multivariés $\Pi^1_{(t,m)}$ de la manière suivante :

$$\Pi^1_{(t,m)} (a_{i1},...,a_{im})= (b_{i1},...,b_{it}).$$

Le second moyen d'application 19 applique simultanément le t-uplet de données intermédiaire $(b_{i1},...,b_{it})$ et le p-uplet d'entrée $E_i$ correspondant au m-uplet de données Mi au second ensemble de polynômes multivariés $\Pi^2_{(p,k)}$ pour déterminer le p-uplet de sortie $V_i$ de la manière suivante :

$$\Pi^2_{(p,k)}(b_{i1},...,b_{it},e_{i1},...,e_{ip})= (v_{i1},...,v_{ip}).$$

Bien entendu, le second ensemble de polynômes multivariés $\Pi_{(p,k)}$ est de forme compressive comportant un nombre p de polynômes plus petit que le nombre de variables k=t+p associées à chaque polynôme.

Avantageusement, le premier ensemble de polynômes multivariés $\Pi^1_{(t,m)}$ est de forme expansive, c'est-à-dire comportant un nombre t de polynômes plus grand que le nombre de variables m associées à chaque polynôme.

En effet, la forme expansive du premier ensemble de polynômes multivariés $\Pi^1_{(t,m)}$ permet de garantir la non-collision au cours de la première étape et d'augmenter la résistance aux collisions au cours de l'étape suivante de compression réalisée par le second ensemble de polynômes multivariés $\Pi^2_{(p,k)}$.

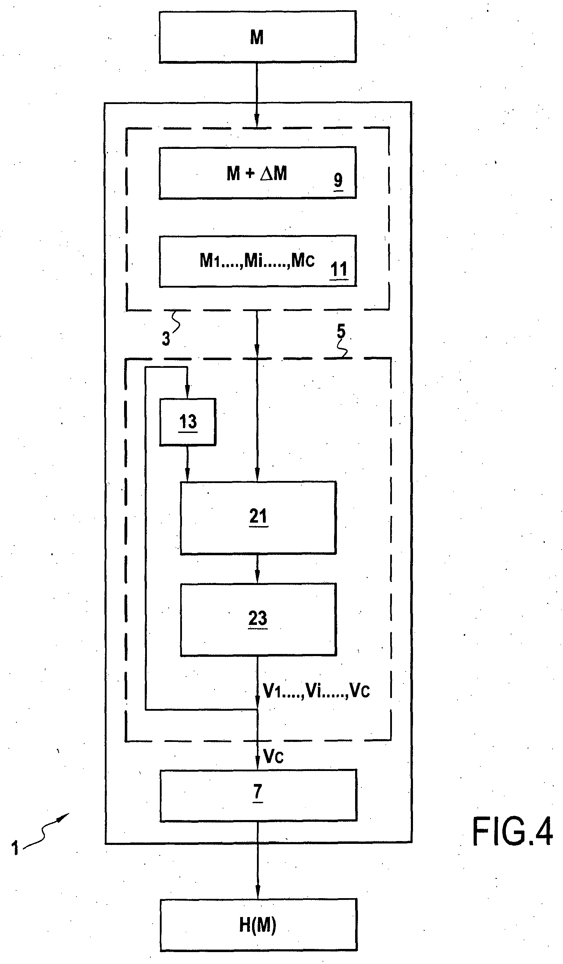

La figure 4 illustre un autre mode de réalisation du dispositif 1 de hachage cryptographique. Le dispositif de la figure 4 se distingue de celui de la figure 1 par le fait que ledit au moins un ensemble de polynômes multivariés $\Pi$ est constitué par deux ensembles de polynômes multivariés :

$$\Pi^1_{(t,m+p)} = P^1_1(x_1,...,x_{m+p}),...,P^1_t(x_1,...,x_{m+p}) \quad \text{et}$$

$$\Pi^2_{(p,t)} = P^2_1(x_1,...,x_t),...,P^2_p(x_1,...,x_t).$$

Selon cet exemple, le premier ensemble de polynômes multivariés $\Pi^1_{(t,m+p)}$ comporte t polynômes à m+p variables et le second ensemble de polynômes multivariés $\Pi^2_{(p,t)}$ comporte p polynômes à t variables.

Ainsi, pour calculer le p-uplet de sortie $V_i$ correspondant au m-uplet de données Mi, les moyens d'application 15 comportent un premier moyen d'application 21 et un second moyen d'application 23.

Le premier moyen d'application 21 calcule un t-uplet de données intermédiaire $(b_{i1},...,b_{it})$ en appliquant simultanément le m-uplet de données et ledit p-uplet d'entrée $E_i$ correspondant au premier ensemble de polynômes multivariés $\Pi^1_{(t,m+p)}$ de la manière suivante :

$$\Pi^1_{(t;m+p)}(a_{i1},...,a_{im}, e_{i1},...,e_{ip}) = (b_{i1},...,b_{it}).$$

Le second moyen d'application 21 applique le t-uplet de données intermédiaire au second ensemble de polynômes multivariés $\Pi^2_{(p,t)}$ pour déterminer ledit p-uplet de sortie $V_i$ de la manière suivante :

$$\Pi^2_{(p,t)}(b_{i1},...,b_{it}) = (v_{i1},...,v_{ip}).$$

Avantageusement, le premier ensemble de polynômes multivariés $\Pi^1_{(t,m+p)}$ est de forme expansive comportant un nombre t de polynôme plus grand que le nombre de variables m+p associées à chaque polynôme. Alors, le second ensemble de polynômes multivariés $\Pi^2_{(p,t)}$ est de forme compressive comportant un nombre p de polynôme plus petit que le nombre de variables t associées à chaque polynôme.

On notera que pour les modes de réalisations des figures 3 et 4, les polynômes des premier et second ensembles de polynômes multivariés sont de degré quelconque.

Avantageusement, afin de faciliter le calcul mais toujours avec un niveau de sécurité élevé, les polynômes des premier et second ensembles de polynômes multivariés peuvent être de degré 2.

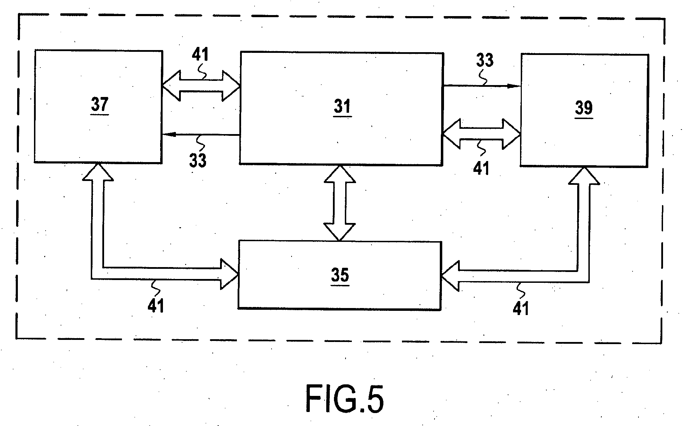

La figure 5 illustre très schématiquement un système informatique mettant en oeuvre le dispositif 1 de hachage cryptographique selon les figures 1 à 4. Ce système informatique comporte de manière classique une unité centrale de traitement 31 commandant par des signaux 33 une mémoire 35, une unité d'entrée 37 et une unité de sortie 39. Tous les éléments sont raccordés entre eux par des bus de données 41.

De plus, ce système informatique peut être utilisé pour exécuter un programme d'ordinateur comportant des instructions pour la mise en oeuvre du procédé de hachage cryptographique selon l'invention.

En effet, l'invention vise aussi un programme d'ordinateur téléchargeable depuis un réseau de communication comprenant des instructions pour l'exécution des étapes du procédé de hachage cryptographique selon l'invention lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

**Revendications**

1. Procédé de hachage cryptographique d'un message M, **caractérisé en ce qu'**il comporte les étapes suivantes :

   - former une séquence (M1,...Mi,...,Mc) de m-uplets de données M1=$(a_{1,1},...., a_{1,m})$,..., Mi=$(a_{i,1},...., a_{i,m})$,..., Mc=$(a_{c,1},...., a_{c,m})$, où m est un entier strictement positif, à partir dudit message M,
   - calculer de manière itérative des p-uplets successifs de sortie $V_1,...V_i,...,V_c$, où p est un entier strictement positif, correspondant à ladite séquence (M1,...Mi,...,Mc) de m-uplets de données en fonction d'au moins un ensemble de polynômes multivariés définis sur un corps fini, ledit calcul itératif des p-uplets successifs de sortie $(V_1,...V_i,...,V_c)$ comportant les étapes suivantes :

       - définir un p-uplet d'entrée d'initialisation $E_0=(e_{o1},...,e_{0p})$ dans le corps fini,
       - appliquer ledit p-uplet d'entrée d'initialisation $E_0$ et un premier m-uplet de données M1 audit au moins un ensemble de polynômes multivariés pour calculer un premier p-uplet de sortie $V_1$ correspondant audit premier m-uplet de données M1,
       - définir, à chaque nouvelle itération numéro i courante, un p-uplet d'entrée courant $E_i=(e_{i1},...,e_{ip})$ dans le corps fini qui est fonction au moins de l'un des p-uplets de sortie $(V_1,..., V_{i-1})$ calculés aux itérations précédentes, et appliquer ledit p-uplet d'entrée courant $E_i$ et un m-uplet de données courant Mi audit au moins un ensemble de polynômes multivariés pour calculer un p-uplet de sortie courant $V_i$ correspondant audit m-uplet de données courant Mi, et

       - déterminer une valeur de hachage dudit message M en fonction du dernier p-uplet de sortie $V_c$.

2. Procédé selon la revendication 1, **caractérisé en ce que** le p-uplet d'entrée courant $E_i=(e_{i1},...,e_{ip})$ correspond à un p-uplet d'enchaînement défini comme étant égal au précédent p-uplet de sortie $V_{i-1}$ calculé à l'itération précédente.

3. Procédé selon l'une quelconque des revendications 1 à 2, **caractérisé en ce que** ledit au moins un ensemble de polynômes multivariés est modifié à chaque itération i en fonction dudit p-uplet d'entrée courant $E_i=(e_{i1},...,e_{ip})$.

4. Procédé selon l'une quelconque des revendications 1 à 3, **caractérisé en ce que** le calcul dudit p-uplet de sortie $V_i$ correspondant audit m-uplet de données Mi comporte une application simultanée dudit m-uplet de données et du p-uplet d'entrée correspondant $E_i$ à un seul ensemble de polynômes multivariés, ledit ensemble de polynômes multivariés étant de forme compressive.

5. Procédé selon l'une quelconque des revendications 1 à 3, **caractérisé en ce que** le calcul dudit p-uplet de sortie $V_i$ correspondant audit m-uplet de données Mi comporte les étapes suivantes :

   - calculer un t-uplet de données intermédiaire en appliquant ledit m-uplet de données Mi à un premier ensemble de polynômes multivariés,
   - appliquer simultanément ledit t-uplet de données intermédiaire et le p-uplet d'entrée $E_i$ correspondant audit m-uplet de données Mi à un second ensemble de polynômes multivariés pour déterminer ledit p-uplet de sortie $V_i$.

6. Procédé selon l'une quelconque des revendications 1 à 3, **caractérisé en ce que** le calcul dudit p-uplet de sortie correspondant audit m-uplet de données Mi comporte les étapes suivantes :

   - calculer un t-uplet de données intermédiaire en appliquant simultanément ledit m-uplet de données et ledit p-uplet d'entrée $E_i$ correspondant à un premier ensemble de polynômes multivariés,
   - appliquer ledit t-uplet de données intermédiaire à un second ensemble de polynômes multivariés pour déterminer ledit p-uplet de sortie $V_i$.

7. Procédé selon l'une quelconque des revendications 5 ou 6, **caractérisé en ce que** ledit premier ensemble de polynômes multivariés est de forme expansive, et ledit second ensemble de polynômes multivariés est de formé compressive.

8. Dispositif de hachage cryptographique d'un message M, **caractérisé en ce qu'**il comporte :

- des moyens de formation (3) pour former une séquence (M1,...Mi,...,Mc) de m-uplets de données M1=$(a_{1,l},....,a_{1,m})$,..., Mi=$(a_{i,1},...., a_{i,m})$,..., Mc=$(a_{c,1},...., a_{c,m})$, où m est un entier strictement positif, à partir dudit message M,
- des moyens de calcul (5) pour calculer de manière itérative des p-uplets successifs de sortie $V_1,...V_i,...,V_c$, où p est un entier strictement positif, correspondant à ladite séquence (M1,...Mi,...,Mc) de m-uplets de données en fonction d'au moins un ensemble de polynômes multivariés définis sur un corps fini F, lesdits moyens de calcul (5) comportant :

- des moyens (13) pour définir un p-uplet d'entrée d'initialisation $E_0=(e_{o1},...,e_{0p})$ dans le corps fini F,
- des moyens (15) pour appliquer ledit p-uplet d'entrée d'initialisation $E_0$ et un premier m-uplet de données M1 audit au moins un ensemble de polynômes multivariés pour calculer un premier p-uplet de sortie $V_1$ correspondant audit premier m-uplet de dorinées M1,
- des moyens (13) pour définir dans le corps fini F à chaque nouvelle itération i courante, un p-uplet d'entrée courant $E_i=(e_{i1},...,e_{ip})$ qui est fonction au moins de l'un des p-uplets de sortie $V_1,..., V_{i-1}$ calculés aux itérations précédentes, et
- des moyens (15) pour appliquer ledit p-uplet d'entrée courant $E_i$ et un m-uplet de données courant Mi audit au moins un ensemble de polynômes multivariés pour calculer un p-uplet de sortie courant $V_i$ correspondant audit m-uplet de données courant Mi, et

- des moyens de détermination (7) pour déterminer une valeur de hachage dudit message M en fonction du dernier p-uplet de sortie $V_c$.

9. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes du procédé de hachage cryptographique selon au moins l'une des revendications 1 à 7, lorsqu'il est exécuté sur un ordinateur.

**Patentansprüche**

1. Verfahren für kryptographisches Hashing einer Mitteilung M, **dadurch gekennzeichnet, dass** es die folgenden Schritte umfasst:

- Bilden einer Sequenz (M1,...Mi, ..., Mc) von m-Tupeln von Daten M1=$(a_{1,1},...., a_{1,m})$..., ..., Mi=$(a_{i,1},...., a_{i,m})$,..., Mc=$(a_{c,1},...., a_{c,m})$, wobei m eine strikt positive ganze Zahl ist, ausgehend von der Mitteilung M,
- Iterativ Berechnen der aufeinander folgenden p-Ausgangstupel $V_1,... V_i, ... , V_c$, wobei p eine strikt positive ganze Zahl ist, die der Sequenz (M1,...Mi,...,Mc) von m-Datentupeln in Abhängigkeit von mindestens einer Gesamtheit von multivarianten Polynomen, definiert über einem endlicheren Körper, entspricht, wobei die iterative Berechnung der aufeinander folgenden p-Ausgangstupel $(V_1, ...V_i, ..., V_c)$ die folgenden Schritte umfasst:

- Definieren eines p-Eingangsinitialisierungstupels $E_0= (e_{01}, ..., e_{0p})$ in dem endlicheren Körper,
- Anwenden des p-Eingangsinitialisierungstupels $E_0$ und eines ersten m-Datentupels M1 auf die mindestens eine Gesamtheit von multivarianten Polynomen, um ein erstes p-Ausgangstupel $V_1$ zu berechnen, das dem ersten m-Datentupel M1 entspricht,
- Definieren, bei jeder neuen aktuellen Iteration Nummer i, eines aktuellen p-Eingangstupels $E_i= (e_{i1}, ... , e_{ip})$ in dem endlicheren Körper, das von mindestens einem der p-Ausgangstupel $(V_1, ..., V_{i-1})$ abhängig ist, die in den vorhergehenden Iterationen berechnet wurden, und Anwenden des aktuellen p-Eingangstupels $E_i$ und eines aktuellen m-Datentupels Mi auf die mindestens eine Gesamtheit von multivarianten Polynomen, um ein aktuelles p-Ausgangstupel $V_i$ zu berechnen, das dem aktuellen m-Datentupel Mi entspricht, und
- Bestimmen eines Hashing-Werts der Mitteilung M in Abhängigkeit vom letzten p-Ausgangstupel $V_c$.

2. Verfahren nach Anspruch 1, **dadurch gekennzeichnet, dass** das aktuelle p-Eingangstupel $E_i= (e_{i1}, ..., e_{ip})$ einem p-Verkettungstupel entspricht, das als gleich dem vorhergehenden p-Ausgangstupel $V_{i-1}$ definiert ist, das in der vorhergehenden Iteration berechnet wurde.

3. Verfahren nach einem der Ansprüche 1 bis 2, **dadurch gekennzeichnet, dass** die mindestens eine Gesamtheit von multivarianten Polynomen bei jeder Iteration i in Abhängigkeit von dem aktuellen p-Eingangstupel $E_i= (e_{i1}, ...,$

e$_{ip}$) modifiziert wird.

**4.** Verfahren nach einem der Ansprüche 1 bis 3, **dadurch gekennzeichnet, dass** die Berechnung des p-Ausgangstupels V$_i$, das dem m-Datentupel Mi entspricht, eine gleichzeitige Anwendung des m-Datentupels und des entsprechenden p-Eingangstupels E$_i$ auf eine einzige Gesamtheit von multivarianten Polynomen umfasst, wobei die Gesamtheit von multivarianten Polynomen eine komprimierte Form aufweist.

**5.** Verfahren nach einem der Ansprüche 1 bis 3, **dadurch gekennzeichnet, dass** die Berechnung des p-Ausgangstupels V$_i$, das dem m-Datentupel Mi entspricht, die folgenden Schritte umfasst:

- Berechnen eines t-Tupels von Mitteldaten, indem das m-Datentupel Mi auf eine erste Gesamtheit von multivarianten Polynomen angewendet wird,
- gleichzeitiges Anwenden des t-Tupels von Mitteldaten und des p-Eingangstupels E$_i$, das dem m-Datentupel Mi entspricht, auf eine zweite Gesamtheit von multivarianten Polynomen, um das p-Ausgangstupel V$_i$ zu bestimmen.

**6.** Verfahren nach einem der Ansprüche 1 bis 3, **dadurch gekennzeichnet, dass** die Berechnung des p-Ausgangsgstupels, das dem m-Datentupel Mi entspricht, die folgenden Schritte umfasst:

- Berechnen eines t-Tupels von Mitteldaten, indem das m-Datentupel und das entsprechende p-Eingangstupel E$_i$ gleichzeitig auf eine erste Gesamtheit von multivarianten Polynomen angewendet werden,
- Anwenden des t-Tupels von Mitteldaten auf eine zweite Gesamtheit von multivarianten Polynomen, um das p-Ausgangstupel V$_i$ zu bestimmen.

**7.** Verfahren nach einem der Ansprüche 5 oder 6, **dadurch gekennzeichnet, dass** die erste Gesamtheit von multivarianten Polynomen eine expansive Form aufweist, und die zweite Gesamtheit von multivarianten Polynomen eine komprimierte Form aufweist.

**8.** Vorrichtung für kryptographisches Hashing einer Mitteilung M, **dadurch gekennzeichnet, dass** sie Folgendes umfasst:

- Einrichtungen zum Bilden (3) zum Bilden einer Sequenz (M1,...Mi, ..., Mc) von m-Datentupeln M1=(a$_{1,1}$,..., a$_{1,m}$),..., Mi=(a$_{i,1}$,..., a$_{i,m}$),..., Mc=(a$_{c,1}$,..., a$_{c,m}$), wobei m eine strikt positive ganze Zahl ist, ausgehend von der Mitteilung M,
- Einrichtungen zum Berechnen (5) zum iterativen Berechnen der aufeinander folgenden p-Ausgangstupel V$_1$, ... V$_i$, ... , V$_c$, wobei p eine strikt positive ganze Zahl ist, die der Sequenz (M1,...Mi,...,Mc) von m-Datentupeln in Abhängigkeit von mindestens einer Gesamtheit von multivarianten Polynomen, definiert über einem endlicheren Körper F, entspricht, wobei die Einrichtungen zum Berechnen (5) Folgendes umfassen:

- Einrichtungen (13) zum Definieren eines p-Eingangsinitialisierungstupels E$_0$= (e$_{01}$,..., e$_{0p}$) in dem endlicheren Körper F,
- Einrichtungen (15) zum Anwenden des p-Eingangsinitialisierungstupels E$_0$ und eines ersten m-Datentupels M1 auf die mindestens eine Gesamtheit von multivarianten Polynomen, um ein erstes p-Ausgangstupel V$_1$ zu berechnen, das dem ersten m-Datentupel M1 entspricht,
- Einrichtungen (13) zum Definieren, in dem endlicheren Körper F bei jeder neuen aktuellen Iteration i, eines aktuellen p-Eingangstupels E$_i$= (e$_{i1}$, ..., e$_{ip}$), das von mindestens einem der p-Ausgangstupel V$_1$,..., V$_{i-1}$ abhängig ist, das in den vorhergehenden Iterationen berechnet wurde, und
- Einrichtungen (15) zum Anwenden des aktuellen p-Eingangstupels E$_i$ und eines aktuellen m-Datentupels Mi auf die mindestens eine Gesamtheit von multivarianten Polynomen, um ein aktuelles p-Ausgangstupel V$_i$ zu berechnen, das dem aktuellen m-Datentupel Mi entspricht, und

- Einrichtungen zum Bestimmen (7) zum Bestimmen eines Hashing-Werts der Mitteilung M in Abhängigkeit von dem letzten p-Ausgangstupel V$_c$.

**9.** Computerprogramm, das von einem Kommunikationsnetzwerk herunterladbar ist und/oder auf einem computerlesbaren Träger gespeichert ist und/oder von einem Mikroprozessor ausführbar ist, **dadurch gekennzeichnet, dass** es Anweisungen für die Ausführung der Schritte des Verfahrens für kryptographisches Hashing nach mindestens einem der Ansprüche 1 bis 7 umfasst, wenn es auf einem Computer ausgeführt wird.

**Claims**

1. Method for the cryptographic hashing of a message M, **characterized in that** it comprises the following steps:

   - forming a sequence $(M1,...Mi,...,Mc)$ of data m-uplets $M1 = (a_{1,i},...,a_{1,m}),...,Mi = (a_{i,1},...,a_{i,m}),...,Mc = (a_{c,1},...,a_{c,m})$, where m is a strictly positive integer, from said message M,
   - iteratively computing successive output p-uplets $V_1,...V_i,...,V_c$, where p is a strictly positive integer, corresponding to said sequence $(M1,...Mi,...,Mc)$ of data m-uplets as a function of at least one set of multivariate polynomials defined over a finite field, said iterative computation of the successive output p-uplets $(V_1,...V_i,...,V_c)$ comprising the following steps:

      - defining an initialization input p-uplet $E_0 = (e_{01},...,e_{0p})$ in the finite field,
      - applying said initialization input p-uplet $E_0$ and a first data m-uplet M1 to said at least one set of multivariate polynomials to compute a first output p-uplet $V_1$ corresponding to said first data m-uplet M1,
      - defining, on each current new iteration number i, a current input p-uplet $E_i = (e_{i1},...,e_{ip})$ in the finite field which is a function of at least one of the output p-uplets $(V_1,...,V_{i-1})$ computed on the preceding iterations, and applying said current input p-uplet $E_i$ and a current data m-uplet Mi to said at least one set of multivariate polynomials to compute a current output p-uplet $V_i$ corresponding to said current data m-uplet Mi, and
      - determining a hash value of said message M as a function of the last output p-uplet $V_c$.

2. Method according to Claim 1, **characterized in that** the current input p-uplet $E_i = (e_{i1},...,e_{ip})$ corresponds to a sequencing p-uplet defined as being equal to the preceding output p-uplet $V_{i-1}$ computed on the preceding iteration.

3. Method according to either one of Claims 1 and 2, **characterized in that** said at least one set of multivariate polynomials is modified on each iteration i as a function of said current input p-uplet $E_i = (e_{i1},...,e_{ip})$.

4. Method according to any one of Claims 1 to 3, **characterized in that** the computation of said output p-uplet $V_i$ corresponding to said data m-uplet Mi comprises a simultaneous application of said data m-uplet and of the corresponding input p-uplet $E_i$ to a single set of multivariate polynomials, said set of multivariate polynomials being of compressive form.

5. Method according to any one of Claims 1 to 3, **characterized in that** the computation of said output p-uplet $V_i$ corresponding to said data m-uplet Mi comprises the following steps:

   - computing an intermediate data t-uplet by applying said data m-uplet Mi to a first set of multivariate polynomials,
   - simultaneously applying said intermediate data t-uplet and the input p-uplet $E_i$ corresponding to said data m-uplet Mi to a second set of multivariate polynomials to determine said output p-uplet $V_i$.

6. Method according to any one of Claims 1 to 3, **characterized in that** the computation of said output p-uplet corresponding to said data m-uplet Mi comprises the following steps:

   - computing an intermediate data t-uplet by simultaneously applying said data m-uplet and said corresponding input p-uplet $E_i$ to a first set of multivariate polynomials,
   - applying said intermediate data t-uplet to a second set of multivariate polynomials to determine said output p-uplet $V_i$.

7. Method according to either one of Claims 5 and 6, **characterized in that** said first set of multivariate polynomials is of expansive form, and said second set of multivariate polynomials is of compressive form.

8. Device for the cryptographic hashing of a message M, **characterized in that** it comprises:

   - forming means (3) for forming a sequence $(M1,...M1,...,Mc)$ of data m-uplets $M1 = (a_{1,1},...,a_{1,m}),..., Mi = (a_{i,1},...,a_{i,m}),..., Mc = (a_{c,1},...,a_{c,m})$, where m is a strictly positive integer, from said message M,
   - computation means (5) for iteratively computing successive output p-uplets $V_1,...V_i,...,V_c$, where p is a strictly positive integer, corresponding to said sequence $(M1,...Mi,...,Mc)$ of data m-uplets as a function of at least one set of multivariate polynomials defined over a finite field F, said computation means (5) comprising:

      - means (13) for defining an initialization input p-uplet $E_0 = (e_{01},...,e_{0p})$ in the finite field F,

- means (15) for applying said initialization input p-uplet $E_0$ and a first data m-uplet M1 to said at least one set of multivariate polynomials to compute a first output p-uplet $V_1$ corresponding to said first data m-uplet M1,
- means (13) for defining, in the finite field F on each current new iteration i, a current input p-uplet $E_i = (e_{i1},...,e_{ip})$ which is a function at least of one of the output p-uplets $V_1,...,V_{i-1}$ computed on the preceding iterations, and
- means (15) for applying said current input p-uplet $E_i$ and a current data m-uplet Mi to said at least one set of multivariate polynomials to compute a current output p-uplet $V_i$ corresponding to said current data m-uplet Mi, and

- determination means (7) for determining a hash value of said message M as a function of the last output p-uplet $V_c$.

9. Computer program that can be downloaded from a communication network and/or stored on a computer-readable medium and/or that can be executed by a microprocessor, **characterized in that** it comprises instructions for the execution of the steps of the cryptographic hashing method according to at least one of Claims 1 to 7, when it is run on a computer.

FIG.1

M

M + △M     <u>9</u>

M1...,Mi.....,Mc    <u>11</u>

3

5

<u>13</u>

<u>15</u>

V1,...,Vi.....,Vc

Vc

<u>7</u>

1

H(M)

## FIG.2

| M |
|---|

| M + ΔM | 9 |
|---|---|

| M1....,Mi.....,Mc | 11 |
|---|---|

3    5

| 13 |
|---|

15

| 17 |
|---|

| 19 |
|---|

V1....,Vi.....,Vc

Vc

| 7 |
|---|

1

| H(M) |
|---|

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- One-Way Hash Functions and DES. **R.C. MERKLE.** CRYPTO. Springer-Verlag, 1989
- **CEPENDANT, X. WANG ; H. YU.** *How to Break MD5 and Other Hash Functions,* Mai 2005
- *Finding Collisions in the Full SHA-1,* Août 2005
- **JAKUBOWSKI M H et al.** The chain and sum primitive and its applications to MACs and stream ciphers. *ADVANCES IN CRYPTOLOGY. EUROCRYPT,* 04 Juin 1998, 281-293